# EUROPÄISCHE PATENTSCHRIFT

(11) **EP 2 018 448 B1**
(45) Veröffentlichungstag und Bekanntmachung des Hinweises auf die Patenterteilung: **02.03.2011**
(21) Anmeldenummer: 07718432.3
(22) Anmeldetag: 08.05.2007
(51) Int. Cl.: D02G 3/12, D02G 3/38, D02G 3/44, B01D 39/12

(54) **CHEMISCH RESISTENTE UND FORMBESTÄNDIGE MONOFILAMENTE, EIN VERFAHREN ZU DEREN HERSTELLUNG SOWIE DEREN VERWENDUNG**
CHEMICALLY-RESISTANT AND SHAPE-RETAINING MONOFILAMENTS A METHOD FOR PRODUCTION AND USE THEREOF
MONOFILAMENTS CHIMIQUEMENT RÉSISTANTS ET À STABILITÉ DIMENSIONNELLE, LEUR PROCÉDÉ DE PRODUCTION ET LEUR UTILISATION

(30) Priorität: 15.05.2006 AT 8342006
(43) Veröffentlichungstag der Anmeldung: 28.01.2009
(73) Patentinhaber: Lenzing Plastics Gmbh, 4860 Lenzing (AT)
(72) Erfinder: BACHMAIR, Josef, A-4840 Vöcklabruck (AT); HEMETSBERGER, Alexander, A-4850 Timelkam (AT)
(74) Vertreter: Hanemann, Otto
(86) Internationale Anmeldenummer: PCT/AT2007/000218
(87) Internationale Veröffentlichungsnummer: WO 2007/131252

(56) Entgegenhaltungen:
- EP-A2- 1 491 668
- WO-A-96/02313
- DE-A1- 3 301 270
- US-A- 3 620 368
- US-A- 5 478 372
- US-B1- 6 465 097
- US-B1- 6 534 175

## Beschreibung

Die Erfindung betrifft chemisch resistente und formbeständige Monofilamente, bestehend aus einem Bikomponentenmaterial mit einer Kern-Mantel-Struktur, mit einem Kern aus einem formbeständigen Material und einem Mantel aus Polytetrafluorethylen, ein Verfahren zu deren Herstellung sowie deren Verwendung.

Die Erfindung betrifft weiters die Verwendung der erfindungsgemäßen chemisch resistenten und formbeständigen Monofilamente in Tröpfchenabscheidern sowie in Sieben und Filtern.

Zur Abscheidung von Flüssigkeitströpfchen aus Gasströmen, insbesondere aus der chemischen Industrie und aus Abgasreinigungsanlagen, können Tröpfchenabscheider eingesetzt werden. Diese Tröpfchenabscheider bestehen aus einem Gebilde aus Monofilamenten aus einem geeigneten Material, welche in einem Gehäuse, zum Beispiel einem zylinderförmigen Kessel, eingebaut sind. Der zu reinigende Gasstrom wird durch den Tröpfchenabscheider geleitet. Störende Flüssigkeitströpfchen sammeln sich am Tröpfchenabscheider, werden dort zu größeren Tröpfchen und diese größeren Tröpfchen fallen nach unten und können dann durch eine Öffnung entweder kontinuierlich oder fallweise ausgetragen werden. Ein Beispiel für Tröpfchenabscheider findet sich auf der Website: *http:*//*www.knitmesh.com*/*business*/*separation*/*mist_eliminators*/*misteliminators.htm*/

Das Material für die Monofilamente muß gegenüber den Bestandteilen des Gasstromes weitestgehend beständig sein. Je nach Anforderung werden deshalb Metalle, wie Edelstähle, Nickel, Titan sowie Kunststoffe wie Polypropylen, PTFE, PVDF und auch Gläser eingesetzt.

Die Monofilamente werden hauptsächlich zu Geweben, Gewirken und Gestricken weiterverarbeitet, aus denen die Tröpfchenabscheider gefertigt werden. Die Maschenweite und/oder die Dichte richtet sich nach den Anforderungen.

Eine weitere Anforderung ist die Formbeständigkeit des Materials. Tröpfchenabscheider aus formbeständigen Materialien mit einer hohen Eigensteifigkeit, wie Metalle, benötigen keine bis nur geringe Unterstützung und haben deshalb eine hohe freie Durchgangsfläche für den Gasstrom und somit eine hohe Effizienz.

Der Nachteil von Metallen ist deren mäßige bis schlechte chemische Beständigkeit, welche eine relativ kurze Lebensdauer bedingt.

Fluorpolymere, wie PTFE (Polytetrafluorethylen) und PVDF (Polyvinylidendifluorid) haben eine hohe Temperaturbeständigkeit und eine sehr hohe chemische Beständigkeit, besitzen aber eine zu geringe Formbeständigkeit.

US 3,620,368 offenbart ein chemisch resistentes und formbeständiges Filament bestehend aus einem Bikomponentenmaterial mit einer Kern-Mantel-Struktur, worin der Kern aus einem formbeständigen Material sowie der Mantel aus einer Polytetrafluorethylen-Beschichtung besteht.

EP 1 491 668 offenbart ein chemisch resistente Filament bestehend aus einem Bikomponentenmaterial mit einer Kern-Mantel-Struktur, worin der Kern aus hochfesten synthetischen, endlosen Fasern sowie der Mantel aus Polytetrafluorethylen- Bändchen, welche um den Kern gewickelt sind, besteht.

Die Aufgabe der Erfindung besteht daher darin, ein Material zur Verfügung zu stellen, welches sowohl eine hohe Formbeständigkeit, als auch eine hohe chemische Beständigkeit aufweist.

Die Aufgabe wird durch chemisch resistente und formbeständige Monofilamente, bestehend aus einem Bikomponentenmaterial mit einer Kern-Mantel-Struktur mit einem Kern aus einem formbeständigen Material sowie einem Mantel aus einem Polytetrafluorethylen-Bändchen, welches um den Kern gewickelt und versintert ist, besteht.

Die den Kern bildenden formbeständigen Materialien bestehen aus Metallen, wie Edelstähle, Kupfer, Messing und Aluminium.

Der Gesamtdurchmesser der erfindungsgemäßen Monofilamente beträgt 0,10 mm bis 1,50 mm. Der Kern der Monofilamente weist einen Durchmesser von 0,05 mm bis 1,00 mm auf. Die Manteldicke beträgt daher von 0,025 mm bis 0,25 mm, wobei das Verhältnis von Manteldurchmesser zu Kerndurchmesser kleiner oder gleich 1 ist. Bevorzugte Gesamtdurchmesser der Monofilamente betragen von 0,20 bis 0,60 mm, besonders bevorzugt von 0,28 bis 0,35 mm. Beispielsweise hat bei einem Gesamtdurchmesser von 0,10 mm der Kern einen Durchmesser von 0,05 mm und der Mantel eine Dicke von 0,025 mm. Es ergibt sich somit der Gesamtdurchmesser mit 0,05 mm + 2 x 0,025 mm = 0,10 mm.

Die Ummantelung des formbeständigen Kernes mit dem chemisch resistenten Material kann durch umwickeln erfolgen. Wichtig ist, daß das Kernmaterial vom Mantelmaterial völlig umschlossen ist.

Eine weitere Aufgabe der Erfindung ist ein Verfahren zur Herstellung der erfindungsgemäßen Monofilamente mit einer besonders dichten und chemisch beständigen Ummantelung.

Diese Aufgabe wird dadurch gelöst, daß ein Kernmaterial mit einem ungesinterten PTFE -Bändchen bandiert, zum Beispiel spiralformig umwickelt, wird und anschließend das PTFE-Bändchen versintert wird. Dadurch erhält man einen besonders dichten und beständigen PTFE-Mantel. Die Versinterung erfolgt bei den für PTFE üblichen Temperaturen.

Die Erfindung betrifft weiters Formkörper aus den erfindungsgemäßen chemisch resistenten und formbeständigen Monofilamenten, insbesondere Flächengebilde wie Gewebe, Gewirke und Gestricke.

Ein weiterer Aspekt der Erfindung ist die Verwendung der erfindungsgemäßen Monofilamente, insbesondere in Gestalt von Formkörpern, in Tröpfchenabscheidern sowie in Sieben und Filtern.

Dazu werden die Monofilamente zu geeigneten Formkörper verarbeitet, insbesondere zu Flächengebilden wie Gewebe, Gewirke und Gestricke. Diese Formkörper können bevorzugt in der chemischen Industrie verwendet werden, insbesonders eignen sich die Formkörper zur Verwendung in Tröpfchenabscheidern, Sieben und Filtern.

Die bevorzugte Verwendung der erfindungsgemäßen Monofilamente ist die Verwendung in Tröpfchenabscheidern, insbesondere in Tröpfchenabscheidern für die chemische Industrie.

## Patentansprüche

1. Chemisch resistente und formbeständige Monofilamente bestehend aus einem Bikomponentenmaterial mit einer Kern-Mantel-Struktur, worin, der Kern aus einem formbeständigen Material besteht **dadurch gekennzeichnet, daß** der Mantel aus einem Polytetrafluorethylen-Bändchen, welches um den Kern gewickelt und versintert ist, besteht.

2. Chemisch resistente und formbeständige Monofilamente nach Anspruch 1, **dadurch gekennzeichnet, daß** die den Kern bildenden formbeständigen Materialien aus Metallen, wie Edelstähle, Kupfer, Messing und Aluminium bestehen.

3. Chemisch resistente und formbeständige Monofilamente nach Anspruch 1 oder 2, **dadurch gekennzeichnet, daß** der Gesamtdurchmesser der erfindungsgemäßen Monofilamente 0,10 mm bis 1,50 mm, bevorzugt 0,20 mm bis 0,60 mm, besonders bevorzugt 0,28 mm bis 0,35 mm beträgt.

4. Chemisch resistente und formbeständige Monofilamente nach einem der vorgehenden Ansprüche, **dadurch gekennzeichnet, daß** die Manteldicke von 0,025 mm bis 0,25 mm beträgt.

5. Chemisch resistente und formbeständige Monofilamente nach einem der vorgehenden Ansprüche, **dadurch gekennzeichnet, daß** das Verhältnis von Manteldurchmesser zu Kerndurchmesser kleiner oder gleich 1 ist.

6. Verfahren zur Herstellung chemisch resistenter und formbeständiger Monofilamente nach einem der Ansprüche 1 bis 5, **dadurch gekennzeichnet, daß** ein Kernmaterial mit einem ungesinterten PTFE-Bändchen bandiert, zum Beispiel spiralförmig umwickelt wird und anschließend das PTFE-Bändchen versintert wird.

7. Formkörper aus chemisch resistenten und formbeständigen Monofilamenten nach einem der Ansprüche 1 bis 5 insbesondere Flächengebilden wie Gewebe, Gewirke und Gestricke.

8. Verwendung chemisch resistenter und formbeständiger Monofilamente nach einem der Ansprüche 1 bis 5 in Tröpfchenabscheidern, Sieben und Filtern.

## Claims

1. Chemically resistant and dimensionally stable monofilaments comprising a bicomponent material with a core sheath structure wherein the core consists of a dimensionally stable material **characterised in that** the sheath of a polytetrafluorethylene tape is wound around the core and sintered.

2. Chemically resistant and dimensionally stable monofilaments according to claim 1 **characterised in that** the dimensionally stable materials which form the core are made of metals, such as stainless steels, copper, brass, and aluminium.

3. Chemically resistant and dimensionally stable monofilaments according to claim 1 or 2 **characterised in that** the overall diameter of the monofilaments in accordance with the invention equals 0.10 mm to 1.50 mm, preferably 0.20 mm to 0.60 mm, and most preferably 0.28 mm to 0.35 mm.

4. Chemically resistant and dimensionally stable monofilaments according to one of the claims above **characterised in that** the sheath thickness equals between 0.025 mm to 0.25 mm.

5. Chemically resistant and dimensionally stable monofilaments according to one of the claims above **characterized in that** the ratio of the sheath diameter to the core diameter is smaller or equal to 1.

6. Process for the production of chemically resistant and dimensionally stable monofilaments according to one of claims 1 to 5 **characterised in that** a core material taped with an unsintered PTFE tape, is for example wound round in spiral form and the PTFE tape is then sintered.

7. Moulded bodies of chemically resistant and dimensionally stable monofilaments according to one of claims 1 to 5 in particular textile structures such as woven fabrics and knit fabrics.

8. Use of chemically resistant and dimensionally stable monofilaments according to one of claims 1 to 5 in droplet separators, sieves and filters.

## Revendications

1. Monofilaments de forme stable et résistants à l'action chimique comprenant une matière à deux composants avec une structure d'enveloppe du noyau, **caractérisés par le fait que** le noyau est composé d'une matière de forme stable et l'enveloppe d'une bandelette en polytétrafluoréthylène, enroulée et frittée autour du noyau.

2. Monofilaments de forme stable et résistants à l'action chimique selon la revendication 1, **caractérisés par le fait que** les matières de forme stable formant le noyau se composent de métaux comme aciers spéciaux, cuivre, laiton et aluminium.

3. Monofilaments de forme stable et résistants à l'action chimique selon la revendication 1 ou 2, **caractérisés par le fait que** le diamètre total des monofilaments objet de l'invention est de 0,10 mm à 1,50 mm, de préférence 0,20 mm à 0,60 mm, et encore mieux de 0,28 mm à 0,35 mm.

4. Monofilaments de forme stable et résistants à l'action chimique selon l'une des revendications précédentes, **caractérisés par le fait que** l'épaisseur de l'enveloppe est de 0,025 mm à 0,25 mm.

5. Monofilaments de forme stable et résistants à l'action chimique selon l'une des revendications précédentes, **caractérisés par le fait que** le rapport entre diamètre de l'enveloppe et l'enveloppe du noyau est plus petit ou égal à 1.

6. Procédé de fabrication de monofilaments de forme stable et résistants à l'action chimique selon l'une des revendications 1 à 5, **caractérisé par le fait qu'**une matière de noyau est recouverte par une bandelette non frittée en PTFE, par exemple enroulée en spirale et que la bandelette PTFE est ensuite frittée.

7. Corps moulé en monofilaments de forme stable et résistants à l'action chimique selon l'une des revendications 1 à 5, notamment des produits comme des tissus, articles à maille et tricotés.

8. Utilisation de monofilaments de forme stable et résistants à l'action chimique selon l'une des revendications 1 à 5 dans des séparateurs de gouttes, des tamis et des filtres.
